# EUROPEAN PATENT SPECIFICATION

(11) **EP 0 520 422 B1**
(45) Date of publication and mention of the grant of the patent: **05.10.1994**
(21) Application number: 92110666.2
(22) Date of filing: 25.06.1992
(51) Int. Cl.: C03B 37/014

(54) **Process for production of glass article**
Verfahren zum Herstellen eines Glasgegenstandes
Procédé de fabrication d'un objet en verre

(30) Priority: 25.06.1991 JP 153414/91
(43) Date of publication of application: 30.12.1992
(73) Proprietor: SUMITOMO ELECTRIC INDUSTRIES, LTD, Osaka-shi, Osaka-fu 541 (JP)
(72) Inventor: Danzuka, Toshio, c/o Yokohama Works of Sumitomo, Yokohama-shi, Kanagawa-ken (JP); Ito, Masumi, c/o Yokohama Works of Sumitomo, Yokohama-shi, Kanagawa-ken (JP); Tsuchiya, Ichiro, c/o Yokohama Works of Sumitomo, Yokohama-shi, Kanagawa-ken (JP)
(74) Representative: Hansen, Bernd, Dr. Dipl.-Chem.

(56) References cited:
- PATENT ABSTRACTS OF JAPAN vol. 12, no. 491 (C-554)(3338) 21 December 1988 & JPA 63 201 025
- DATABASE WPIL Section Ch, Week 41, Derwent Publications Ltd., London, GB; Class L01, AN 84-253001 & JPA 59 152 228

## Description

### BACKGROUND OF THE INVENTION

### Field of the Invention

The present invention relates to a process for the production of a glass article. In particularly, the present invention relates to an effective process for the production of a glass preform for an optical fiber or an intermediate article of the preform.

### Description of the Related Art

A fine glass particle deposited body, for example a glass preform for an optical fiber, which has been produced by a vapor phase synthesis process such as vapor Phase Axial Deposition (VAD) process or Outside Chemical Vapor Deposition (OVD) process, is thermally treated at an elevated temperature in an electric furnace so that it is vitrified to provide a glass article.

Hitherto, the vitrification of the fine glass particle deposited body was carried out by passing the body through a narrow heating zone at a normal pressure under an atmosphere comprising He or an inert gas containing a small amount of a halogen-containing gas (especially, a chlorine-containing gas), which operation is called a zone-heating process. Alternatively, the fine glass particle deposited body is heated to be vitrified with a gradual temperature increase in an electric furnace having a heating space large enough to heat the whole body, which operation is called a uniform heating process.

In the above processes, when the fine glass deposited body is vitrified, gases such as those confined among fine glass particles of the body and/or gases dissolved in the body during the vitrification operation may leave voids and pores (which may be called bubbles) in the resulted glass article. In addition to or instead of the leaving bubbles, bubbles may be generated due to the dissolved gases during a subsequent treatment at an elevated temperature. In order to avoid the bubble problems, Japanese Patent Kokai Publication No. 201025/1988 discloses a vitrification process which is carried out under an atmosphere of a reduced pressure or a vacuum pressure. In this process, the gases contained in the fine glass particle deposited body is evacuated because of the reduced pressure or the vacuum pressure so that no gas can be left in the resulted glass article.

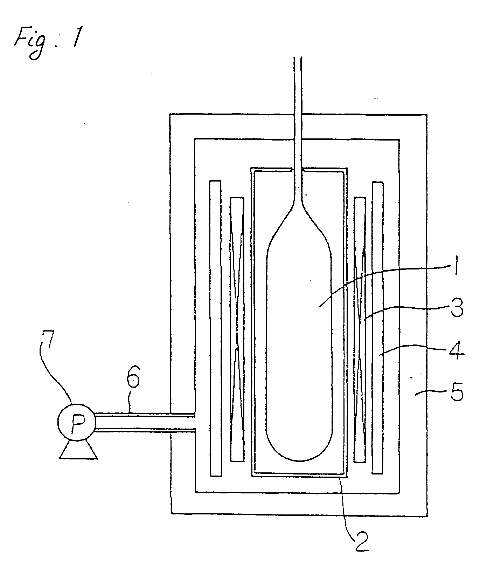

A conventional heating apparatus for the thermal treatment of the fine glass particle deposited body is constituted as shown in Figure 1. The apparatus comprises a holding furnace having a muffle tube 2 which surrounds the fine glass particle deposited body 1 and a heater 3 which is placed around the muffle tube 2, and a vacuum vessel 5 in which the furnace is placed beyond a heat shield 4. A gas in the vacuum vessel 5 can be evacuated through a pipe 6 by a vacuum pump 7 so that a reduced pressure atmosphere or a vacuum pressure atmosphere can be formed in the vacuum vessel. During evacuation, a heater temperature is increased, whereby the glass body 1 placed in the muffle tube 2 is changed to a vitrified article.

A surface portion of the vitrified glass article is sometimes crystallized or bubble like bright materials are sometimes found near a surface portion of the vitrified glass article. According to our research, such events occur in a few glass articles treated just after reconstruction of the muffle tube 2 or after the fine glass particle deposited body has been broken during the vitrifying treatment and a part of the fine glass body has dropped.

In order to use these produced vitrified glass articles, such impurities (that is, the crystallized glass, bubble like materials etc.) in the surface portion of the article should be removed by, for example, abrading the article surface.

JP-A-59 152 228, which describes a process disclosing all the features of the pre-characterising part of claim 1 of the present invention, refers to the preparation of a high-strength quartz glass pipe according to which the quartz glass pipe is heated to high temperatures, equal to or higher than its softening temperature, and wherein at the same time vacuum is applied to remove the air bubbles contained in the quartz glass pipe.

### SUMMARY OF THE INVENTION

It is, therefore, an object of the present invention to provide a process for the production of a glass article without the impurities therein.

According to the present invention, there is provided a process for the production of a glass article in which a fine glass particle deposited body produced by a vapor phase synthesis process is thermally treated and vitrified under an atmosphere of a reduced pressure in a muffle tube of a vacuum furnace placed in a vacuum vessel so that the glass article is obtained, characterized in that the vacuum furnace with the muffle tube is prebaked at a baking temperature not lower than a vitrification temperature of the fine glass particle deposited body while she vacuum vessel is evacuated before the fine glass particle deposited body is placed in the vacuum oven for vitrification.

In the process according to the present invention, the baking temperature is generally in the range of 1550-1750 °C, preferably in the range of 1600-1700 °C, more preferably in the range of 1600-1650 °C, and the baking is continued until the pressure inside the vacuum vessel is decreased to preferably below 10 Pa, more preferably below 5 Pa.

### BRIEF DESCRIPTION OF THE DRAWINGS

Figure 1 schematically shows a conventional apparatus for the vitrification of a fine glass particle deposited body to obtain a vitrified glass article
Figure 2 is a graph, showing a temperature-time curve for the baking operation of the vacuum furnace in the process of the present invention.

### DETAILED DESCRIPTION OF THE INVENTION

According to our research, it has been found that the impurities in she surface portion of the vitrified glass article are generated by the following mechanisms:

The glass is crystallized and devitrified when the glass is heated to a high temperature in the presence of a contaminant, for example, carbon powder, metal powder, an alkali and/or a fat and an oil from skin. The bubble like materials seem to be bubbles (or voids) made of carbon powder itself or made by carbon powder as nuclei, or they seem to be of metal powder. Gases in the voids seem to be N₂, O₂ and/or CO₂. In addition, fine powder of SiO₂ to which carbon attaches also seems to be one of the impurities.

In the vacuum furnace as shown in Figure 1, the muffle tube is made of carbon. The heater and most of members which are necessary to constitute the vacuum furnace and its accessories are also made of carbon. Therefore, carbon powder tends to be left on surfaces of the carbon made members because carbon is oxidized by water and/or oxygen contained in a soot preform, and also to be generated when the carbon made members rub each other during assembly of the carbon made members. In addition, when a vacuum condition at an elevated temperature is broken by a certain cause and an ambient atmosphere is involved in the vacuum vessel, surface carbon of the members reacts with oxygen in the air, namely burns, so that rough surfaces appear on the members. These rough surfaces may generate the carbon powder. Thus, it is very effective to prevent the formation of the carbon powder in order to suppress the impurity generation.

When the fine glass particle deposited body is thermally treated, it may be broken and drop in the muffle tube. On such a event, the fine glass particles attach to an inner wall of the carbon made muffle tube. It is very difficult to completely remove such fine glass particles. Further, it is not easy to evacuate gases which adsorbs to any member in the vacuum vessel, and they remain in the vessel. When the furnace is heated to an elevated temperature, the gases appear in the furnace.

As described above, there are many possibilities that the carbon powder and the fine glass powder are generated and float in the vacuum furnace. However, it is impossible from a practical view point to replace the members each time when the impurities are generated. Even if it is possible, there is a possibility at a first stage after the replacement that the carbon powder is generated as described above. Thus, the replacement of the members cannot be a sufficient means to avoid the generation of the impurities.

The present invention made on the basis of our above research resides in the process for removal of the impurities such as the carbon powder, the fine glass particles and so on, in which process, before the fine glass particle deposited body is thermally treated, the vacuum furnace and all members in the vacuum vessel which may generate the impurities is prebaked at the baking temperature not lower than the vitrification point of the glass body while the vacuum vessel is evacuated, whereby the carbon powder, the fine glass particles and/or the gases, which will otherwise appear and /or leave the bubbles during the vitrification step, are removed from the vacuum vessel, and then the fine glass particle deposited body is vitrified to provide the glass article which has neither impurity nor bubble on and near the surface of the glass article.

In order to promote the removal effects including the degassing effect of the present invention, the baking temperature is preferably above 1600 °C. However, the baking temperature is preferably below 1700°C in order to suppress volatilization of metals from metal made members of the vacuum furnace.

As to a baking period, in principle, the longer the period is, the better the effects of the present process are. However, the longer baking period does not necessarily achieve a good furnace efficiency, and it may be difficult to determine whether the baking effects of the present invention have been completely obtained. Thus, we measured the attainable pressures in the vacuum furnace while the furnace was baked with the evacuation of the furnace and we have found that when the vacuum furnace was evacuated to a pressure of less than 10 Pa, preferably less than 5 Pa during the baking, good glass articles were produced.

Usually the carbon made furnace is used when the fine glass particle deposited body is vitrified under the reduced pressure or the vacuum pressure. However, the present invention is also applicable to a case in which a muffle tube made of quartz is used.

### Examples

### Example 1

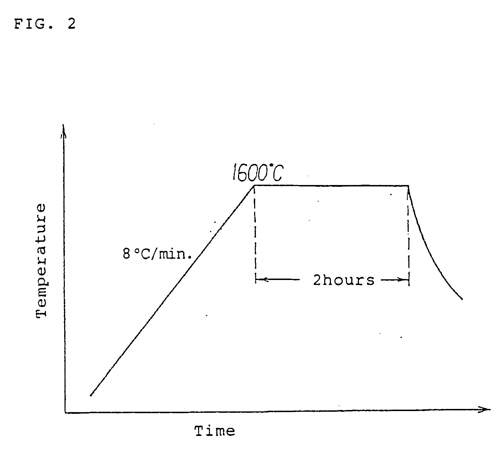

The fine glass particle deposited body produced by the VAD process was vitrified with the vacuum furnace as shown in Figure 1. The fine glass particle deposited body had a size of 150 mm (diameter) x 800 mm (length). Before the body was placed in the furnace for the vitrification, the furnace was evacuated to an nearly vacuum pressure (4 Pa) while the furnace was heated to a temperature of 1600 °C according to a temperature-time curve as shown in the graph of Figure 2, then kept at that temperature for 2 hours and cooled. Then, the fine glass particle deposited body was placed in the furnace and heated to a temperature of 1600 °C to be vitrified under typical conditions for the vitrification (concretely, heating to a temperature of 800 °C in 30 minutes, then increasing the temperature to 1580 °C at a rate of 3 °C/min. and then keeping at that temperature for 10 minutes), whereby a good glass article with a high quality was obtained.

Before the above baking, when the furnace was evacuated with a vacuum pump at a temperature of 800 °C, the pressure in the furnace reached 14 Pa, but no more smaller pressure was reached. To the contrary, on the baking, when the furnace was heated to 1600 °C and kept at that temperature for 30 minutes, the pressure in the furnace reached 10 Pa and after 80 minutes from being at a temperature of 1600 °C, the pressure reached 5 Pa.

### Comparative Example 1

When the vacuum furnace is heated to and kept at a temperature of 800 °C and then evacuated, the pressure in the furnace reached 15 Pa. However, no additional reduction of the pressure was possible though the evacuation was continued for one hour. The fine glass particle deposited body as in Example 1 was placed in the furnace and vitrified by heating the furnace to 1600 °C with evacuation. The resulted article had numerous fine bubbles in a thin layer near its surface. In addition, an optical fiber produced from the body was so weak that any longer fiber was not obtained.

### Example 2

The baking of the furnace was carried out as in Example 1 except that the furnace was kept at a temperature of 1650 °C for 50 minutes and then it was confirmed that a pressure of 7 Pa was reached, and then cooled. Then, the fine glass particle deposited body as in Example 1 was placed in the furnace and heated to a temperature of 1600 °C with evacuation so that the body was vitrified. The resulted article had only two fine bubbles in a thin layer near its surface along an entire length of the vitrified article, and thus almost good vitrification was possible.

As described above, the present process provides the glass article having the high quality by baking the vacuum furnace beforehand so that the impurities such as the carbon powder floating in the furnace and/or the gases contained or dissolved in the body have been removed.

Once the baking operation has been carried out according to the present invention, no additional baking has to be repeated unless an interior factor of the furnace, for example the reconstruction of the carbon members of the furnace, the drop of the part of the fine glass particle deposited body and the exposure of the carbon members to an ambient atmosphere because of breakage of the reduced or vacuum pressure in the furnace, generates.

Measure whether the baking is sufficient is whether the pressure of the vacuum furnace during the baking reaches less than 10 Pa and preferably less than 5 Pa.

## Claims

1. A process for the production of a glass article in which a fine glass particle deposited body produced by a vapor phase synthesis process is thermally treated and vitrified under an atmosphere of a reduced pressure in a muffle tube of a vacuum furnace placed in a vacuum vessel so that the glass article is obtained, characterized in that the vacuum furnace with the muffle tube is prebaked at a baking temperature not lower than a vitrification temperature of the fine glass particle deposited body while the vacuum vessel is evacuated before the fine glass particle deposited body is placed in the vacuum furnace for vitrification.

2. The process according to claim 1 in which the baking temperature is in the range of 1600-1700°C.

3. The process according to claim 1 in which the baking is continued until a pressure in the vacuum furnace has reached less than 10 Pa.

## Patentansprüche

1. Verfahren zur Herstellung eines Glasgegenstandes, bei dem ein Körper aus abgeschiedenen feinen Glasteilchen, der durch ein Dampfphase-Synthese-Verfahren hergestellt wurde, unter Bedingungen von reduziertem Druck in einem Muffelrohr eines Vakuumofens, der in einem Vakuumbehälter angeordnet ist, thermisch behandelt und verglast wird, so daß der Glasgegenstand erhalten wird,
dadurch **gekennzeichnet,** daß
der Vakuumofen mit dem Muffelrohr bei einer Brenntemperatur, die nicht niedriger als eine Verglasungstemperatur des Körpers aus abgeschiedenen feinen Glasteilchen ist, vorgebrannt wird, während der Vakuumbehälter evakuiert wird, bevor der Körper aus abgeschiedenen feinen Glasteilchen zur Verglasung in den Vakuumofen gestellt wird.

2. Verfahren nach Anspruch 1, bei dem die Brenntemperatur im Bereich von 1600 bis 1700°C liegt.

3. Verfahren nach Anspruch 1, bei dem das Brennen fortgesetzt wird bis im Vakuumofen ein Druck von weniger als 10 Pa erreicht ist.

## Revendications

1. Procédé pour la production d'un article en verre dans lequel un corps formé par dépôt de fines particules de verre, produit par un procédé de synthèse en phase vapeur, est traité thermiquement et vitrifié dans une atmosphère de pression réduite dans un tube formant moufle d'un four à vide placé dans une cuve à vide, de sorte qu'on obtient l'article en verre, caractérisé en ce que le four à vide est précuit avec le tube formant moufle à une température de cuisson au moins égale à la température de vitrification du corps formé par dépont de fines particules de verre pendant qu'on fait le vide dans la cuve à vide, avant de placer le corps formé par dépônt de fines particules de verte dans le four à vide pour la vitrification.

2. Procédé selon la revendication 1, dans lequel la température de cuisson est dans l'intervalle de 1600-1700°C.

3. Procédé selon la revendication 1, dans lequel on continue la cuisson jusqu'à ce que la pression dans le four à vide ait atteint une valeur inférieure à 10 Pa.
